Europäisches Patentamt

European Patent Office

Office européen des brevets

(11) Publication number: **0 471 269 A1**

# EUROPEAN PATENT APPLICATION

(21) Application number: **91113155.5**

(51) Int. Cl.5: **G01N 27/22, G01N 27/414**

(22) Date of filing: **05.08.91**

(30) Priority: **13.08.90 IT 6763790**

(43) Date of publication of application:
**19.02.92 Bulletin 92/08**

(84) Designated Contracting States:
**AT BE CH DE DK ES FR GB GR IT LI LU NL SE**

(71) Applicant: **SORIN BIOMEDICA S.p.A.**
**Via Crescentino**
**I-13040 Saluggia (Vercelli)(IT)**

(72) Inventor: **Della Ciana, Leopoldo**
**Via Rossini 37**
**I-48022 Lugo (Ravenna)(IT)**
Inventor: **Chinanglia, Benito**
**Via Moncalvo 33**
**I-10131 Torino(IT)**
Inventor: **Adami, Manuela**
**Via Pian De' Bosi 56**
**I-18038 San Remo (Imperia)(IT)**
Inventor: **Sartore, Marco**
**Via Pian De' Bosi 56**
**I-18038 San Remo (Imperia)(IT)**
Inventor: **Nicolini, Claudio**
**Via Besso 13**
**I-16030 Pieve Ligure (Genova)(IT)**

(74) Representative: **Bosotti, Luciano et al**
**c/o Jacobacci-Casetta & Perani S.p.A. Via**
**Alfieri, 17**
**I-10121 Torino(IT)**

(54) **Chemical-sensitive semiconductor device.**

(57) A chemical sensitive semiconductor (CSSD) device includes essentially a capacitor structure (2, 13, 14, 4, 15) defined by a semiconductor (2) and a medium (15) sensitive to a chemical parameter (pH, redox couple, etc.) to be measured. The capacitance value of the capacitor structure identifies the value of the parameter.

The semiconductor (2) is made insensitive to the chemical parameter e.g. by silicon oxide and silicon nitride coverings (13,14). The sensitive medium (15) is constituted e.g. by a platinum electrode, which interacts with the electrolytic solution (14).

The sensitive medium (15) is kept in a position remote from the semiconductor (2).

The preferred application is to equipment for chemical analysis, possibly with partial disposability characteristics.

FIG. 1
PRIOR ART

FIG. 2

The present invention relates in general to chemical-sensitive semiconductor devices or CSSDs.

This term is intended to indicate devices such as field-effect transistors (FETs), MOS capacitors, gate-controlled diodes, etc. which can change certain of their characteristics (typically a capacitance value) in dependence on the variation of a parameter (for example, the pH, the redox state, the membrane potential, etc.) of a certain chemical medium to which the device is exposed.

The literature in this connection is quite extensive.

For example, the following may be mentioned by way of reference: the article "Ion-Sensitive Field-Effect Transistors and Related Devices" by J.N. Zemel which appeared in Analytical Chemistry, volume 47, No. 2, February 1975, the text "Investigation of the ion-selectivity mechanism of hydrogen ion- sensitive field-effect transistors (ISFETs)" by Vlasov, Bratov and Letavin which corresponds to a communication made to the Third Symposium on ion-selective electrodes by Matrafüred, 1980, the article "Light-addressable Potentiometric Sensor for Biochemical Systems" by Hafeman, Parce and McConnell, which appeared in volume 40 of the Science Review, pages 1182-1185, and the article "Time-dependence of Chemical Response of Silicon Nitride Surfaces" by Bousse, Hafeman and Tran which appeared in the review Sensors and Actuators, B1 (1990) pages 361-367.

As regards patent documentation, reference may usefully be made to European application EP-A-0166108, to PCT application WO 85/04018 and to European applications EP-A-0213825, EP-A-0300651 and EP-A-0310251.

In general, there is great interest in the development of simple and accurate transducers which can measure chemical parameters such as electrochemical potentials, for example membrane potentials, in order to produce sensors and biosensors for a wide range of applications.

Amongst CSSD devices those based on MIS or EIS (metal-insulator-semiconductor or electrolyte-insulator-semiconductor) structure are of particular interest.

The article by Zemel mentioned above proposed the use of a capacitor of this type for detecting electro-chemical potentials, in which a silicon oxide/silicon nitride element is exposed to an electrolytic solution. A silicon-insulator-solution capacitor is formed and can be connected in a circuit by a suitable contact on the silicon and an electrode immersed in the solution. The electrical properties of the system depend on the voltage applied to the two plates of the capacitor, that is between the silicon and the electrolytic solution.

Detailed information on the electro-chemical potential at the interface can be obtained by various techniques all operating with alternating current.

The simplest technique is to evaluate a capacitance/voltage or current/voltage curve (a so-called C/V or i/V curve) which is displaced horizontally by variations due to the electrochemical potential.

The same concept has subsequently been further developed (see the PCT application W085/04018) by a method in which the alternating photoelectric current generated by light pulses transmitted to the silicon is measured; the use of light of a wavelength suitable for generating charges in the depletion layer of the silicon produces a characteristic photoelectric current-voltage curve which is displaced horizontally in dependence on variations in the electrochemical potential.

In both cases one makes use of the characteristic of the curve to determine the potential which is altered by a change in the potential on the surface of the silicon.

It is important to note that this type of potentiometric measurement uses alternating current and therefore has certain advantages over conventional potentiometrical measurements (very low measurement impedance, lack of interference, etc.).

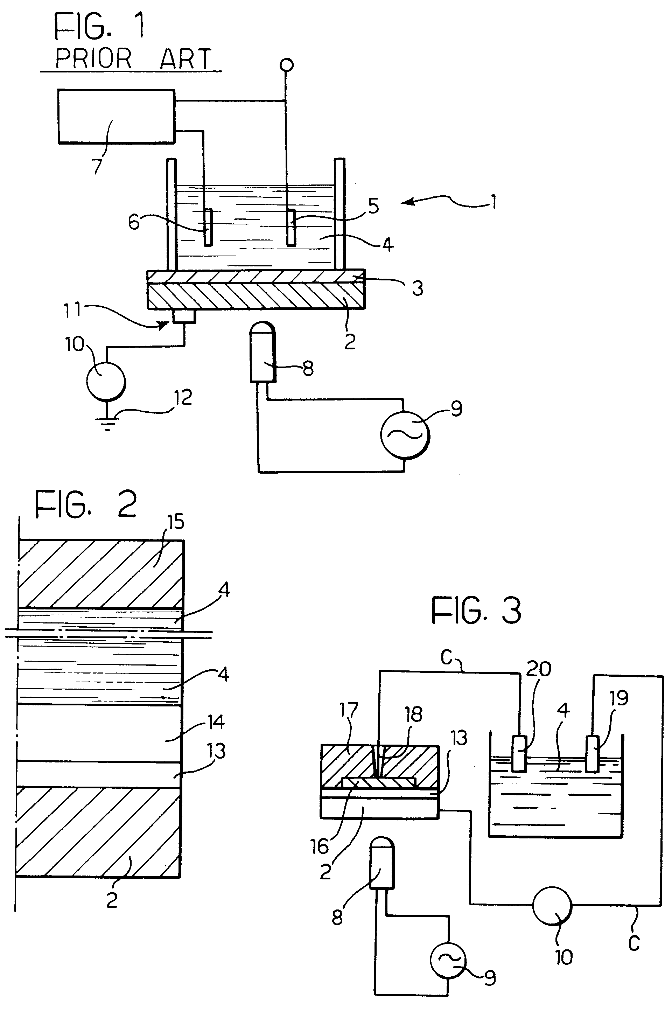

Figure 1 shows schematically a typical structural arrangement of a device according to the prior art, generally indicated 1.

In Figure 1, the reference numeral 2 indicates a semiconductor layer (for example, of silicon) on top of which is an insulating layer 3 (typically $SiO_2$) possibly covered by one or more layers of $Si_3N_4$ or other substances to form a medium which is sensitive to a particular parameter (in the example, the pH) of an electrolyte solution in a container the base wall of which is constituted by the semiconductor 2 and the sensitive medium associated therewith.

A reference electrode, indicated 5, as well as another, control electrode 6 are immersed in the electrolyte solution.

The electrodes 5 and 6 are connected to a potentiostat 7 which is intended to establish a polarisation voltage across the system formed by the semiconductor 2, the insulator 3 and the electrolyte 4, whilst the rear face of the semiconductor 2 (its lower face in the situation of use shown) is illuminated by pulsed light produced by an LED 8 which is excited by a corresponding alternating supply 9.

An alternating current is set up in the capacitor formed by the elements 2, 3 and 4 by the pulsed illumination and its intensity is detected by an ammeter 10 between the semiconductor 2, to which the ammeter 10 is connected by means of a chemical contact 11, and earth 12.

If other factors remain the same, the intensity of the current detected by the ammeter 10 depends on the capacitance of the capacitor formed by the elements 2, 3 and 4, which depends in turn on the manner in which the electrolyte 4 and the sensitive medium (the insulator 3 and any layers associated therewith) interact, and hence on the pH of the electrolyte.

The pH can therefore be measured by measuring the intensity of the alternating current passing through the ammeter 10.

The use of a reference electrode 5 and a control electrode 6 in combination, connected to each other by the potentiostat 7, results (on the basis of known criteria which will not be recited specifically herein) from the need to arrange for the "counter-electrode", that is, the assembly of conductive elements which form the plate of the capacitor opposite the silicon 2, not to affect and/or to be affected by the parameter to be measured, thus upsetting the measurement.

This solution corresponds to a belief well established in the prior art, according to which the interactions relevant to the measurement should take place exclusively with a sensitive medium disposed close to the semiconductor.

This requirement means that in the vast majority of cases (taking into account that the chosen application for the devices in question is the measurement of parameters of solutions of electrolytes, analytical solutions, immunological test solutions, etc.) the semiconductor layer has to be immersed in, or in any case be arranged in close proximity to, the solution so as to act as a containing wall therefor.

More generally, in a situation of use such as that shown in Figure 1, as well as having to constitute the base of a good capacitor (with the obvious requirement that it must be free of defects, etc.), the semiconductor 2 must also be able to constitute a good site for certain interface reactions (for example, it must show selectivity for some species such as protons, etc.). Moreover, it is essential to ensure that the assembly is liquid-tight when the device is in use in order to prevent the creation of parallel paths for the propagation of current through the semiconductor or around it, which could upset or even cancel out correct measurements.

Moreover, various other requirements must be taken into account in the production of CSSD devices.

In the first place, it is desirable to provide devices which enable various parameters to be measured without the need for radical alterations or replacements.

In the second place, it would be very useful to be able to provide devices in which the sensitive elements, which are subject to deterioration, could be replaced quite frequently even to the extent of providing disposable sensitive elements which could be thrown away after use.

Clearly, in prior-art solutions, these requirements conflict with the fact that, in practice, the sensitive element of the device is the semiconductor, so that the replacement of elements which have deteriorated involves the need to replace the device as a whole.

Moreover, the need to combine various functions in the semiconductor (as indicated above) conflicts with the optimisation of certain strictly electrical parameters of the semiconductor. For example, the semiconductor has to be of a certain shape in order to be able to contain liquids.

The object of the present invention is therefore to provide a chemical-sensitive semiconductor device (in the most general meaning of this term given above) which solves the aforementioned problems.

According to the present invention, this object is achieved by virtue of a method and a device having the characteristics recited specifically in the following claims.

Essentially, the present invention is based on the realisation that, for the purposes of the operation of the device, it is not in fact necessary for the medium sensitive to the parameter to be measured to be located close to the semiconductor.

On the contrary, the sensitive medium may very well be located in a position remote from the semiconductor.

Specifically, according to this solution at least two different alternatives may be adopted, that is to say:

- making the semiconductor substantially insensitive to the parameter to be measured and using the counter-electrode and/or means associated therewith as the sensitive element/medium, and

- connecting the sensitive element/medium to the semiconductor by means of an ohmic contact and keeping the sensitive element/medium completely separate from the semiconductor.

These embodiments of the invention constitute excellent solutions to the problems set out above.

In particular, one could provide a chemical-sensitive device including a single semiconductor substrate and a plurality of counter-electrodes, each of which is used (after the application of any additional layers) for detecting a respective parameter.

Moreover, the counter-electrode or counter-electrodes may be formed as separate elements which can be replaced easily even after a single measurement operation giving rise to a typical disposable configuration, without involving the need for the semiconductor or the elements associated therewith to be replaced from time to time. This manner of use can easily also be extended to a detection cell including the counter-electrode and a sensitive medium which is connected to the semiconductor substrate remotely by means of a chemical contact so that it is even possible to provide various cells each for detecting a respective parameter.

The invention will now be described purely by way of non-limiting example, with reference to the appended drawings, in which:

Figure 1 has already been described above with specific reference to the prior art,

Figure 2 shows the device of Figure 1 modified in accordance with the invention, and

Figur 3 shows schematically the structure of a device formed wholly according to the invention.

In Figures 2 and 3, elements identical or functionally equivalent to those already described above have been indicated by the same reference numerals as used in Figure 1.

In particular, Figure 2 refers to an embodiment of the invention which has a general arrangement substantially comparable to that of Figure 1 and is based on Examples I and II below.

## Example I

A CSSD device substantially like that shown in Figure 1 was formed with the use, as the semiconductor 2, of a p-type 100 silicon plate with a specific resistivity of 16-24 ohms.cm, covered by a layer 13 of silicon oxide (thickness 300 angstroms), with a further covering layer 14 of silicon nitride with a thickness of 800 angstroms.

An electrolytic solution buffered with a PBS buffer (pH 7.4) suitable for measurements with biological systems was used as the electrolytic solution 4.

The light source 8 used was an infra-red LED (wavelength 904 nanometers) which had an active surface area of 0.2 $cm^2$, and was made to pulsate at a frequency of 3 KHz.

The electrode assembly 5,6,7 of Figure 1 was replaced by a platinum electrode 15 with an exposed surface area of about 0.2 $cm^2$.

A series of i/V curve determinations (photoelectric current measurements) was carried out with this structure (according to known criteria which do not need to be recited specifically herein) with the addition to the solution 4 of redox couples with different ratios between the oxidised species and the reduced species.

In the specific example, the redox agents were potassium hexacyanoferrate (II) and (III).

As will readily be appreciated, the semiconductor 2 was actually rendered insensitive to variations in the redox potential of the buffered solution by its silicon oxide and silicon nitride coverings 13 and 14.

Variations in the photoelectric current (more precisely, variations in the inflection potentials of the i-V curves) induced in dependence on variations in the redox potentials were determined solely by the interaction between the platinum electrode 15 (which acted as the sensitive medium) and the solution 4.

Under these conditions, there was a nernstian variation in the inflection potential of the i-V curve in relation to the ratio between the two concentrations. This showed that the system could be used to measure variations in redox potentials in buffered solutions and is thus suitable for constituting the detection base of a biosensor.

## Example II

The structure of Example I above was used for a pH measurement with a metallic layer, in this particular case, a layer of gold about 0.5 microns thick, deposited on the silicon nitride layer 14, with the interposition of a layer of chromium to facilitate adhesion.

A 2% agar gel including a 1/1 mixture of the redox couple described in Example I with a concentration of the parts of 0.1 M was placed on the gold layer. The gel was electrically in contact with the electrolytic solution 4 in which the platinum electrode 15 was immersed by means of a salt bridge (2% agar with potassium chloride).

With the arrangement described above (gold-gel deposit-salt bridge) a double-junction electrode was formed on the surface of the silicon 2 and was certainly insensitive both to pH variations and to changes in the electroactive species present in the solution under test.

The previous measurement of the redox response was repeated and a nernstian response was again obtained even in the absence of a pH buffer, with the pH varying within a range of from 5 to 9.

The tests of Examples I and II show clearly that the location of the sensitive medium in a position remote from the semiconductor 2 - which is rendered completely insensitive to the parameter to be measured - has no adverse effect on the achievement of correct measurements.

## Example III

In the solution of Figure 3, an island or pad 16 of gold was applied to the silicon layer 2 with its oxide covering 13 and was encapsulated in a ceramic element 17 which acted as a substrate and had a hole 18, possibly filled with a conductive resin, from which a conductor in contact with the pad 16 projected.

The silicon 2 and the gold pad 16 were then connected by respective ohmic conductors (of aluminium in the tests carried out) to two respective electrodes immersed in the solution 4. More precisely, the semiconductor 2 was connected to a reference electrode (Ag/AgCl) 19 and the pad 16 to an iridium/iridium oxide electrode 20.

The silicon 2 was illuminated by the pulsed light produced by the LED 8, and the intensity of the photoelectric current was detected by the ammeter 10 connected in the circuit in which the current flowed through the solution 4. This arrangement was used to measure pH. For measuring redox couples, a platinum electrode was used as the sensitive electrode 20 instead of the iridium/iridium oxide electrode. In both cases a wholly satisfactory nernstian response was obtained.

Naturally, the principle of the invention remaining the same, the details of construction and forms of embodiment may be varied widely with respect to those described and illustrated, without thereby departing from the scope of the present invention.

**Claims**

1. A method of measuring a chemical parameter (4) including the steps of:
   - forming a capacitor structure including a semiconductor (2) and at least one medium (15; 19, 20) sensitive to the parameter so that the capacitance of the capacitor structure varies in dependence on the parameter, and
   - detecting (10) the value of the capacitance, the capacitance value being indicative of the parameter,

   characterised in that it includes the step of keeping the sensitive medium (15, 19, 20) in a position remote from the semiconductor (2).

2. A method according to Claim 1, characterised in that the semiconductor (2) is made substantially insensitive to the parameter.

3. A method according to Claim 1 or Claim 2, characterised in that the method is carried out with a counter-electrode (15) arranged opposite the semiconductor (2) in the capacitor structure, and in that the sensitive medium is defined substantially by the counter-electrode (15).

4. A method according to Claim 1, characterised in that the semiconductor (2) is connected to the sensitive medium (19, 20) by ohmic conductor means (C).

5. A method according to any one of Claims 1 to 4, characterised in that in order to detect the capacitance value (10) an alternating electrical current is made (8, 9) to flow through the capacitor structure.

6. A method according to Claim 5, characterised in that the alternating current is made to flow by the intermittent illumination of the semiconductor (2).

7. A method according to any one of Claims 1 to 6, characterised in that the semiconductor (2) is silicon-based.

8. A method according to any one of Claims 1 to 7, applied to the measurement of the ratio between the oxidised species and the reduced species of a redox couple in solution, characterised in that the semiconductor (2) is rendered substantially insensitive to the parameter measured by being covered with an insulator such as silicon oxide (13) and silicon nitride (14).

9. A method according to any one of Claims 1 to 8, applied to the measurement of the pH of a solution, characterised in that the semiconductor (2) is rendered substantially insensitive to the parameter measured, as well as to the redox potential of the solution, as a result of the formation of a double-junction electrode on the semiconductor (2).

10. A method according to Claim 9, characterised in that there are applied to the semiconductor (2):
    - a layer of insulating material (13),
    - a layer of silicon nitride (14),
    - a metallic layer, for example, of gold possibly with the interposition of a layer of an adhesion promoter such as chromium, and
    - a layer which forms a salt bridge.

11. A method according to any one of Claims 1 to 10, characterised in that the parameter is a parameter of a solution (4), and in that the sensitive medium is constituted by an electrode immersed in the solution.

12. A device for measuring a chemical parameter, including:
   - a capacitor structure including a semiconductor (2) and at least one medium (15; 19, 20) sensitive to the parameter so that the capacitance of the capacitor structure varies in dependence on the parameter, and
   - means (10) for detecting (10) the value of the capacitance, the capacitance value being indicative of the parameter,

   characterised in that the sensitive medium (15; 19, 20) is located in a position remote from the semiconductor (2).

13. A device according to Claim 12, characterised in that the semiconductor (2) is substantially insensitive to the parameter.

14. A device according to Claim 12 or Claim 13, characterised in that opposite the semiconductor (2) in the capacitor structure is a counter-electrode (15) which substantially defines the sensitive medium.

15. A device according to Claim 12, characterised in that it includes ohmic conductor means (C) which connect the semiconductor (2) to the sensitive medium (19, 20).

16. A device according to any one of Claims 12 to 15, characterised in that it includes means (8, 9) for causing an alternating current to flow through the capacitor structure.

17. A device according to Claim 16, characterised in that it includes light-generating means (8) which are activated (9) intermittently to illuminate the semiconductor (2) in order to cause the current to flow.

18. A device according to any one of Claims 12 to 17, characterised in that the semiconductor (2) is silicon-based.

19. A device according to any one of Claims 12 to 18, used to measure the ratio between the oxidised species and the reduced species of a redox couple in solution, characterised in that the semiconductor is covered by an insulator such as silicon oxide (13) and silicon nitride (14), so as to be substantially insensitive to the parameter measured.

20. A device according to any one of Claims 12 to 19, used to measure the pH of a solution, characterised in that a double-junction electrode formed on the semiconductor (2) is insensitive to variations in the pH and the redox potential of the solution.

21. A device according to Claim 20, characterised in that there are applied to the semiconductor (2):
   - a layer of insulating material (13),
   - a layer of silicon nitride (14),
   - a metallic layer, for example, of gold, possibly with the interposition of a layer of an adhesion promoter such as chromium, and
   - a layer which forms a salt bridge.

22. A device according to any one of Claims 12 to 21, for measuring a parameter of a solution (4), characterised in that the sensitive medium is constituted by an electrode immersed in the solution.

23. A device according to any one of Claims 12 to 22, characterised in that it includes a single semiconductor substrate (2) associated with a plurality of different sensitive media.

24. A device according to any one of Claims 12 to 22, characterised in that the sensitive medium may be replaced by another sensitive medium after one or more uses, without the need also to change the semiconductor (2).

FIG. 1
PRIOR ART

FIG. 2

FIG. 3

| DOCUMENTS CONSIDERED TO BE RELEVANT | | | EP 91113155.5 |
|---|---|---|---|
| **Category** | **Citation of document with indication, where appropriate, of relevant passages** | **Relevant to claim** | **CLASSIFICATION OF THE APPLICATION (Int. Cl.5)** |
| Y | GB - A - 2 096 824 (SIBBALD) * Totality * | 1-8, 11,12 19,22, 23 | G 01 N 27/22 G 01 N 27/414 |
| A | | 9,10, 20,21, 24 | |
| D,Y | EP - A2 - 0 213 825 (MOLECULAR DEVICES) * Abstract; fig.; column 3, line 31 - column 4, line 36; column 6, line 25 - column 7, line 32; column 10, lines 14-35 * | 1-8, 11,12 19,22, 23 | |
| A | EP - A2 - 0 241 991 (SENTRON) * Fig.; claims * | 9,10, 20,21 | |
| D,A | EP - A2 - 0 300 651 (MOLECULAR DEVICES) * Fig.; abstract; column 12, lines 36-56 * | 1,12 | **TECHNICAL FIELDS SEARCHED (Int. Cl.5)** G 01 N |
| A | US - A - 4 816 118 (OYAMA) * Abstract; fig. 11,12; column 15, line 6 - column 16, line 10 * | 9,10, 20,21 | |

The present search report has been drawn up for all claims

| Place of search VIENNA | Date of completion of the search 06-11-1991 | Examiner NARDAI |
|---|---|---|

EPO FORM 1503 03.82 (P0401)